# EUROPÄISCHE PATENTSCHRIFT

(11) **EP 1 623 129 B1**
(45) Veröffentlichungstag und Bekanntmachung des Hinweises auf die Patenterteilung: **25.08.2010**
(21) Anmeldenummer: 04728530.9
(22) Anmeldetag: 21.04.2004
(51) Int. Cl.: F16D 13/62, F16D 13/64

(54) **LAMELLENKUPPLUNG, INSBESONDERE FÜR EIN DOPPELKUPPLUNGSGETRIEBE**
MULTI-DISC CLUTCH, PARTICULARLY FOR A TWIN CLUTCH TRANSMISSION
EMBRAYAGE A DISQUES MULTIPLES, DESTINE EN PARTICULIER A UNE BOITE DE VITESSES A DOUBLE EMBRAYAGE

(30) Priorität: 02.05.2003 DE 10319703
(43) Veröffentlichungstag der Anmeldung: 08.02.2006
(73) Patentinhaber: Dr. Ing. h.c. F. Porsche AG, 70435 Stuttgart (DE)
(72) Erfinder: HÖBEL, Peter, 75242 Neuhausen (DE); STERNBERG, Michael, 72644 Oberboihingen (DE)
(86) Internationale Anmeldenummer: PCT/EP2004/004190
(87) Internationale Veröffentlichungsnummer: WO 2004/097240

(56) Entgegenhaltungen:
- DE-A- 19 827 339
- DE-A- 19 904 134
- DE-C- 19 827 340

## Beschreibung

Die Erfindung betrifft eine Lamellenkupplung, insbesondere für ein Doppelkupplungsgetriebe.

Aus der DE 199 04 134 A1 ist es bekannt, aus Gründen der Gewichtsersparnis die Nabe eines Kupplungskorbes mit Ausnehmungen zu versehen. Aus der DE 198 27 340 C1 ist es bekannt, ebenfalls aus Gründen der Gewichtseinsparung auf der Mantelfläche eines Gehäuses einer Lamellenkupplung Öffnungen bzw. Ausnehmungen einzubringen.

Aufgabe der Erfindung ist es, bei einem mit einer Nabe versehenen Kupplungskorb füreine Lamellenkupplung weitere Maßnahmen zur Gewichtseinsparung vorzusehen, um die beim Betrieb auftretenden Massenträgheitsmomente zu reduzieren bei gleichzeitiger Sicherstellung eines formstabilen Kupplungskorbes.

Die Aufgabe wird durch die im Anspruch 1 angegebenen Merkmale gelöst.

Durch die Kombination von in der Nabe und im Mantel des Kupplungskorbes ausgebildeten Ausnehmungen, wobei die um den gesamten Mantelumfang verteilt angeordneten Öffnungen als dreieckförmige Ausnehmungen ausgebildet sind, wird unter Beibehaltung der erforderlichen Formsteifigkeit eine Gewichtsreduzierung erreicht, mit der die Massenträgheitsmomente bis zu 30% gegenüber einer ohne Ausnehmungen versehenen Kupplungskorbstruktur gesenkt werden können.

Durch die in den vom Anspruch 1 abhängigen Ansprüchen aufgeführten Maßnahmen sind weitere, vorteilhafte Ausgestaltungen und Weiterbildungen der Lamellenkupplung möglich.

Die im Kupplungskorb ausgebildeten dreieckförmigen Ausnehmungen sind so ausgerichtet, dass sich zwischen mindestens zwei benachbarten Ausnehmungen ein Steg mit im wesentlichen konstanter Breite ergibt. Damit wird eine fachwerkförmige Verstrebung erzielt, die trotz erheblicher Gewichtsreduzierung die Formstabilität des Kupplungskorbes auch bei hohen Motordrehzahlen sicher stellt.

Untersuchungen haben ergeben, dass bei der Verwendung abgerundeter Ecken für die Ausnehmungen im Mantel des Kupplungskorbes die Steifigkeit des Kupplungskorbes weiter verbessert werden kann.

Der Kupplungskorb weist einen ersten Mantelabschnitt auf, in dem die dreieckförmigen Ausnehmungen eingebracht sind, während ein zweiter Mantelabschnitt des Kupplungskorbes auf seiner Innenseite mit einer Verzahnung für eine drehfeste Aufnahme der außenverzahnten Lamellenscheiben versehen ist. Auf der Außenseite des zweiten Mantelabschnittes sind ebenfalls Öffnungen zur Gewichtsreduzierung vorgesehen, die sich um den gesamten Mantelumfang erstrecken.

Der äußere Kupplungskorb ist Bestandteil eines Doppelkupplungsgetriebes, bei dem ein weiterer innerer konzentrisch zum äußeren Kupplungskorb angeordneter Kupplungskorb vorgesehen ist, wobei der innere Kupplungskorb im wesentlichen dieselbe axiale Breite aufweist, wie der erste Mantelabschnitt des äußeren Kupplungskorbes. Damit ist sicher gestellt, dass die sich in diesem Bereich addierenden Massen bzw. Radien der beiden Kupplungskörbe nicht zu unzulässig hohen Fliehkräften bzw. Massenträgheitsmomenten führen.

Ein Ausführungsbeispiel der Erfindung ist in der nachfolgenden Beschreibung und Zeichnung näher erläutert.

Es zeigen:
- Fig. 1: einen Kupplungskorb einer Lamellenkupplung und
- Fig. 2: eine schematische Darstellung einer Doppelkupplungsanordnung

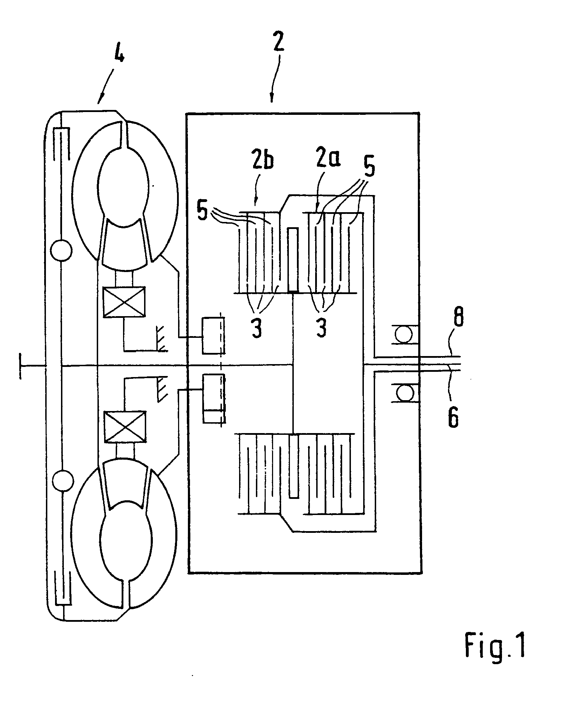

Die in Fig. 1 schematisch dargestellte Lamellenkupplung 2 ist Bestandteil einer Doppelkupplungsanordnung, die eingangsseitig über einen Drehmomentwandler 4 mit einem nicht dargestellten Motor und ausgangsseitig mit zwei Getriebeeingangswellen 6 und 8 verbunden ist. Letztere sind drehfest mit einem inneren Kupplungskorb 2a bzw. einem äußeren Kupplungskorb 2b verbunden, die beide, wie auch die Getriebeeingangswellen 6 und 8 konzentrisch zueinander angeordnet sind. In den beiden Kupplungskörben 2a, 2b sind aussenverzahnte Lamellenscheiben 3 sowie innenverzahnte Lamellenscheiben 5 angeordnet, wobei die aussenverzahnten Lamellenscheiben 3 mit dem Kupplungskorb 2a bzw. 2b drehfest verbunden sind, während die innenverzahnten Lamellenscheiben 5 auf einem Lamellenträger drehfest angeordnet sind.

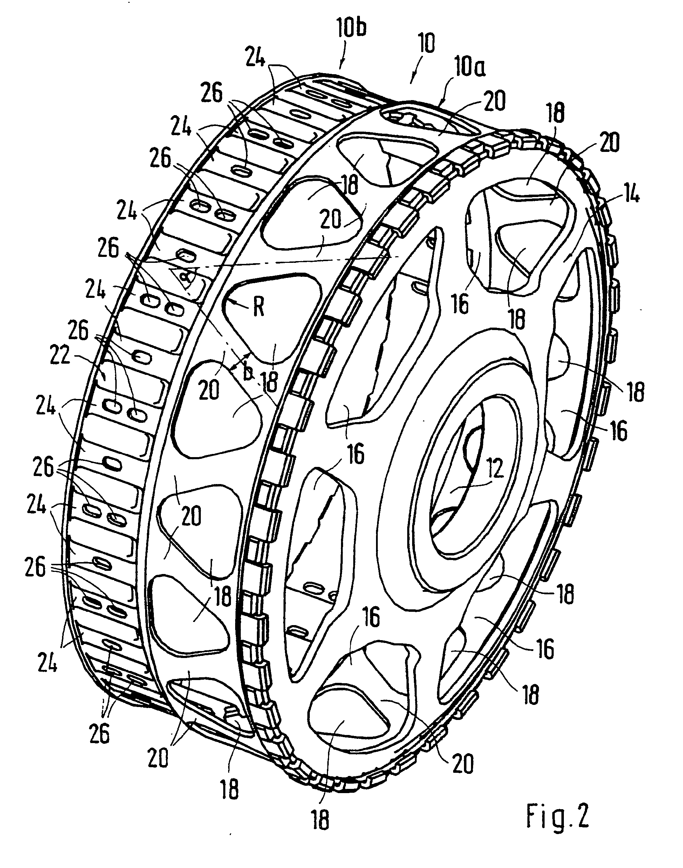

Der in Fig. 2 näher dargestellte Aufbau des äußeren Kupplungskorbes 2b wird im nachfolgenden näher beschrieben. Der äußere Kupplungskorb 2b besteht aus einem spanlos gefertigten Blechkörper, der einen zylinderförmigen Mantel 10 aufweist, an dem seitlich eine mit einer zentralen Öffnung 12 versehene Nabe 14 angeordnet ist. In die zentrale Öffnung 12 greift die innere Getriebeeingangswelle 6 über eine nicht dargestellte Verzahnung formschlüssig ein. In der Nabe 14 sind um die zentrale Öffnung 12 herum gleichmäßig verteilt angeordnete Öffnungen bzw. Ausnehmungen 16 vorgesehen, so dass die sich daraus ergebende Speichenform der Nabe 14 zu einer Gewichtsreduzierung des Kupplungskorbes 2b beiträgt. Der Mantel 10 des Kupplungskorbes 2b weist einen ersten Mantelabschnitt 10a auf, in dem um seinem gesamten Umfang gleichmäßig verteilt angeordnete dreieckförmige Ausnehmungen 18 eingebracht sind, die so zueinander wechselseitig ausgerichtet sind, dass sich zwischen den jeweils benachbarten Ausnehmungen 18 Stege 20 mit im wesentlichen konstanter Breite b ausbilden, wobei jeweils zwei benachbarte Stege 20 unter einem Winkel α zueinander ausgerichtet sind. Damit ergibt sich eine fachwerkförmige Verstrebung, die trotz der im ersten Mantelabschnitt 10a vorgesehenen Ausnehmungen 18 eine auch für hohe Motordrehzahlen erforderliche Steifheit des Kupplungskorbes 2b sicher stellen. Die im wesentlichen als gleichseitige Dreiecke ausgebildeten Ausnehmungen 18 sind in ihren Eckbereichen jeweils mit einem Radius R versehen. Der sich an den ersten Mantelabschnitt anschließende zweite Mantelabschnitt 10b weist eine Innenverzahnung 22 auf, in die außenverzahnte Lamellenscheiben 5 des äußeren Kupplungskorbes 2b eingreifen. Zwischen den Zähnen der Innenverzahnung 22 bilden sich Stege 24 aus, die ebenfalls zur Gewichtsersparnis mit Langlochöffnungen 26 versehen sind. Als Kompromiss zwischen Gewichtsreduzierung und Beibehaltung einer ausreichenden Formsteifigkeit sind jeweils im Wechsel ein bzw. zwei Langlochöffnungen 26 in den Stegen 24 eingebracht.

Die zuvor beschriebene Kupplungskorbstruktur einer Lamellenkupplung ist nicht auf die beschriebene Anwendung in einem Doppelkupplungsgetriebe eingeschränkt, sondern auch bei einfachen manuellen oder automatisierten Schaltgetrieben einsetzbar.

## Patentansprüche

1. Lamellenkupplung (2), insbesondere für ein Doppelkupplungsgetriebe, mit mindestens einem Kupplungskorb (2b), in dem im Wechsel außen- und innenverzahnte Lamellenscheiben (3, 5) aufgenommen sind, sowie mit einer stirnseitig am Kupplungskorb angeordneten Nabe (14), in der eine zentrale Öffnung (12) für die Aufnahme einer Getriebewelle (6) vorgesehen ist, sowie mit in der Nabe angeordneten Öffnungen (16) zur Gewichtsreduzierung, wobei sowohl in der Nabe (14) als auch in der Mantelfläche (10) des Kupplungskorbes (2b) Öffnungen (16, 18, 26) eingebracht sind, wobei die in einem ersten Mantelabschnitt um seinen gesamten Mantelumfang (10a) verteilt angeordneten Öffnungen (18) als dreieckförmige Ausnehmungen ausgebildet und so ausgerichtet sind, dass sich zwischen mindestens zwei benachbarten Ausnehmungen ein Steg (20) mit im wesentlichen konstanter Breite (b) ergibt.

2. Lamellenkupplung nach Anspruch 1, **dadurch gekennzeichnet, dass** die Ecken der Ausnehmungen (18) mit einem Radius (R) versehen sind.

3. Lamellenkupplung nach einem der vorhergehenden Ansprüche, **dadurch gekennzeichnet, dass** an dem ersten Mantelabschnitt (10a) sich ein zweiter Mantelabschnitt (10b) anschließt, der auf seiner Innenseite mit einer Verzahnung (22) für eine drehfeste Verbindung mit den außenverzahnten Lamellenscheiben (5) des Kupplungskorbes (2b) versehen ist.

4. Lamellenkupplung nach Anspruch 3, **dadurch gekennzeichnet, dass** auf der Außenseite des zweiten Mantelabschnittes (10b) Öffnungen (26) vorgesehen sind, die sich um den gesamten Mantelumfang erstrecken.

5. Lamellenkupplung nach einem der vorhergehenden Ansprüche, **dadurch gekennzeichnet, dass** im äußeren Kupplungskorb (2b) ein weiterer, konzentrisch zum äußeren Kupplungskorb angeordneter innerer Kupplungskorb (2a) vorgesehen ist, in dem ebenfalls außen- und innenverzahnte Lamellenscheiben (3, 5) aufgenommen sind, wobei der innere Kupplungskorb (2a) im wesentlichen dieselbe axiale Breite aufweist, wie der erste Mantelabschnitt (10a) des äußeren Kupplungskorbes (2b).

## Claims

1. Multiplate clutch (2), in particular for a double clutch gearbox, having at least one clutch cage (2b) in which externally toothed and internally toothed plate discs (3, 5) are held in an alternating fashion, and also having a hub (14) which is arranged on the face side of the clutch cage and in which is provided a central opening (12) for receiving a gearbox shaft (6), and also having openings (16), which are arranged in the hub, for weight reduction, with openings (16, 18, 26) being formed both in the hub (14) and also in the casing surface (10) of the clutch cage (2b), with the openings (18) which are arranged in a first casing section so as to be distributed around the entire casing circumference (10a) thereof being formed as triangular openings and being aligned such that a web (20) with a substantially constant width (b) is formed between at least two adjacent recesses.

2. Multiplate clutch according to Claim 1, **characterized in that** the corners of the recesses (18) are provided with a radius (R).

3. Multiplate clutch according to one of the preceding claims, **characterized in that** the first casing section (10a) is adjoined by a second casing section (10b) which, on its inside, is provided with a toothing (22) for a rotationally fixed connection to the externally toothed plate discs (5) of the clutch cage (2b).

4. Multiplate clutch according to Claim 3, **characterized in that** openings (26) are provided on the outside of the second casing section (10b), which openings (26) extend over the entire casing circumference.

5. Multiplate clutch according to one of the preceding claims, **characterized in that** the outer clutch cage (2b) has provided in it a further, inner clutch cage (2a) which is arranged concentrically with respect to the outer clutch cage and in which are likewise held externally and internally toothed plate discs (3, 5), with the inner clutch cage (2a) having substantially the same axial width as the first casing section (10a) of the outer clutch cage (2b).

## Revendications

1. Embrayage à disques multiples (1) destiné en particulier à une boîte de vitesses à double embrayage, avec au moins une cage d'embrayage (2b) dans laquelle des disques à lamelles à denture intérieure et extérieure (3, 5) sont logés en alternance, ainsi qu'avec un moyeu (14) disposé côté frontal au niveau de la cage d'embrayage dans lequel une ouverture centrale (12) est prévue pour le logement d'un arbre de boîte de vitesses (6), ainsi qu'avec des ouvertures (16) disposées dans le moyeu pour réduire le poids, des ouvertures (16, 18, 26) étant réalisées tant dans le moyeu (14) que dans la surface de l'enveloppe (10) de la cage d'embrayage (2b), les ouvertures (18) étant disposées dans un premier segment d'enveloppe de façon répartie autour de l'ensemble de son périmètre d'enveloppe (10a) sous la forme d'évidements triangulaires et orientées de telle façon qu'on obtient, entre au moins deux évidements connexes, un étai (20) de largeur (b) pour l'essentiel constante.

2. Embrayage à disques multiples selon la revendication 1, **caractérisé en ce que** les coins des évidements (18) présentent un rayon (R).

3. Embrayage à disques multiples selon l'une quelconque des revendications précédentes, **caractérisé en ce qu'**un deuxième segment d'enveloppe (10b) est raccordé au premier segment d'enveloppe (10a) pourvu sur son côté intérieur d'un endentement (22) pour une jonction fixe sans rotation avec les disques à lamelles (5) à denture extérieure de la cage d'embrayage (2b).

4. Embrayage à disques multiples selon la revendication 3, **caractérisé en ce que** des ouvertures (26) s'étendant autour de l'ensemble du périmètre d'enveloppe sont prévues sur le côté extérieur du deuxième segment d'enveloppe (10b).

5. Embrayage à disques multiples selon l'une quelconque des revendications précédentes, **caractérisé en ce qu'**une autre cage d'embrayage (2a) intérieure disposée de façon concentrique par rapport à la cage d'embrayage extérieure est prévue dans la cage d'embrayage (2b) extérieure, des disques à lamelles à denture intérieure et extérieure (3, 5) étant également logés dans ladite cage intérieure (2a), celle-ci comportant pour l'essentiel la même largeur axiale que le premier segment d'enveloppe (10a) de la cage d'embrayage (2b) extérieure.
